Europäisches Patentamt

European Patent Office

Office européen des brevets

(11) Publication number: **0 281 874**
**A1**

(12) # EUROPEAN PATENT APPLICATION

(21) Application number: 88102922.7

(51) Int. Cl.⁴: **B60K 17/35**

(22) Date of filing: 26.02.88

(30) Priority: 10.03.87 IT 6717387

(43) Date of publication of application:
14.09.88 Bulletin 88/37

(84) Designated Contracting States:
DE ES FR GB

(71) Applicant: FIATGEOTECH - TECNOLOGIE PER
LA TERRA S.p.A.
Viale delle Nazioni, 55
I-41100 Modena(IT)

(72) Inventor: Brancolini, Emiliano
Via Cristo, 79
I-41030 Sorbara(IT)

(74) Representative: Jorio, Paolo et al
c/o Ingg. Carlo e Mario Torta Via Viotti 9
I-10121 Torino(IT)

(54) **A mechanical transmission between the gear box and the wheels of a four wheel drive motor vehicle.**

(57) The transmission comprises an epicyclic mechanism (3) which is able to transmit drive from the engine shaft (m) to the front shaft (a) and rear shaft (p) of the motor vehicle and which comprises a first rotatable element (14) provided with a first gear wheel (6), a second rotatable element (7) provided with a second gear wheel (7), and a series of planet gears (8) each of which meshes simultaneously with the first and second said gear wheels as well as a third rotatable element (9) which supports the planets, one of the rotatable elements being connected to the engine shaft and each of the other two rotatable elements being connected to one of the front and rear shafts; the transmission is characterised by the fact that it includes over-run means (12) able to allow relative rotation between a pair of the said rotatable elements when the relative rotation of a predetermined element of the pair with respect to the other element is in a predetermined direction and to prevent such relative rotation automatically when the relative rotation of the same predetermined element with respect to the other is in a direction opposite the said predetermined direction.

Fig. 1

## A MECHANICAL TRANSMISSION BETWEEN THE GEAR BOX AND THE WHEELS OF A FOUR WHEEL DRIVE MOTOR VEHICLE

The present invention relates to a mechanical transmission between the gear box and the wheels of a four wheel drive motor vehicle by means of which it is possible to prevent skidding or slipping of the front wheels when the limit of adhesion between these wheels and the ground is exceeded, and to control the braking on all four wheels of the vehicle by braking only the rear wheels and guaranteeing that during braking neither of the two axles can assume a speed different from the other.

Drive transmission between the gear box and the wheels of a four wheel drive motor vehicle is normally achieved by means of an epicyclic mechanism which transmits drive from the vehicle's engine output shaft to a front shaft which drives the front wheels and a rear shaft which drives the rear wheels; the transmission further includes a rear differential and a front differential the first of which connects the said rear shaft to the rear half-shafts and the front of which connects the front shaft to the front half-shafts.

The epicyclic mechanism normally includes a first rotatable element provided with a first gear wheel (sun), a second rotatable element provided with a second gear wheel (ring gear) and a series of planet gears each of which meshes simultaneously with the first and the second gear wheels as well as a third rotatable element (carrier) which supports the planet gears; the first rotatable element is connected to the front shaft, the second to the rear shaft and the third to the drive shaft.

This epicyclic mechanism acts to divide the torque between the front shaft and the rear shaft in a predetermined torque ratio when the vehicle is in normal running conditions moving forward in a straight line, and allows each of the front and rear shafts to assume the angular velocity which is imposed on it by the rolling conditions of the motor vehicle wheels.

Transmissions of the type described have several disadvantages. First of all, the braking installation of the motor vehicle must provide brakes on all four wheels since when a braking moment is applied on only the front or the rear wheels there is no braking action generated on the other pair of wheels through the transmission.

Moreover, whenever the front or rear wheels reach the slip threshold because of the reduced adhesion between the wheel and the ground, the driving torque tends to be transferred only on to the slipping wheels which are not able to transmit any force tangential to the ground, whilst the torque applied to the other two wheels, which are not slipping, tends to fall to zero: consequently, therefore, no force tangential to the ground able to cause displacement of the motor vehicle is transmitted thereto.

The object of the present invention is that of providing a mechanical transmission of the type first indicated by means of which the disadvantages which have been described above can be eliminated.

This object is achieved by means of a mechanical transmission between the gear box and the wheels of a four wheel drive motor vehicle, comprising an epicyclic mechanism for transmitting drive from the drive shaft of the said motor vehicle to a front shaft which drives the front wheels and to a rear shaft which drives the rear wheels, the said epicyclic mechanism including a first rotatable element connected to the said front shaft and fixed to a first gear wheel, a second rotatable element connected to the said gear shaft and fixed to a second gear wheel and a series of planet gears each of which meshes simultaneously with the said first and second gear wheels, and a third rotatable element which supports the said planet gears and on which they are rotatable, one of the said rotatable elements being connected to the said drive shaft and each of the other two rotatable elements being connected to one of the said front and rear shafts, characterised by the fact that it includes over-run means interposed between a pair of the said rotatable elements and operable to allow relative rotation between these two rotatable elements when the relative rotation of a predetermined element of the pair with respect to the other element is in a predetermined direction and to prevent such relative rotation when the relative rotation of the predetermined element with respect to the other element is in a direction opposite the said predetermined direction, the transmission ratio between the said epicyclic mechanism and the said front and rear shafts being chosen in such a way that, during normal forward rectilinear running conditions of the motor vehicle the angular velocity of the two rotatable elements of the said pair is slightly different, and the said over-run means being disposed in such a way that, in the said operating conditions, they allow free relative rotation of the two elements of the said pair.

For a better understanding of the transmission of the present invention a more detailed description of it will now be given by way of example with reference to the attached drawings, in which:

Figure 1 is a schematic view of the transmission of the invention applied to a tractor;

Figure 2 is a schematic partially sectioned side view of an epicyclic mechanism which forms part of the transmission of the invention; and

Figure 3 is a longitudinal section of the transmission.

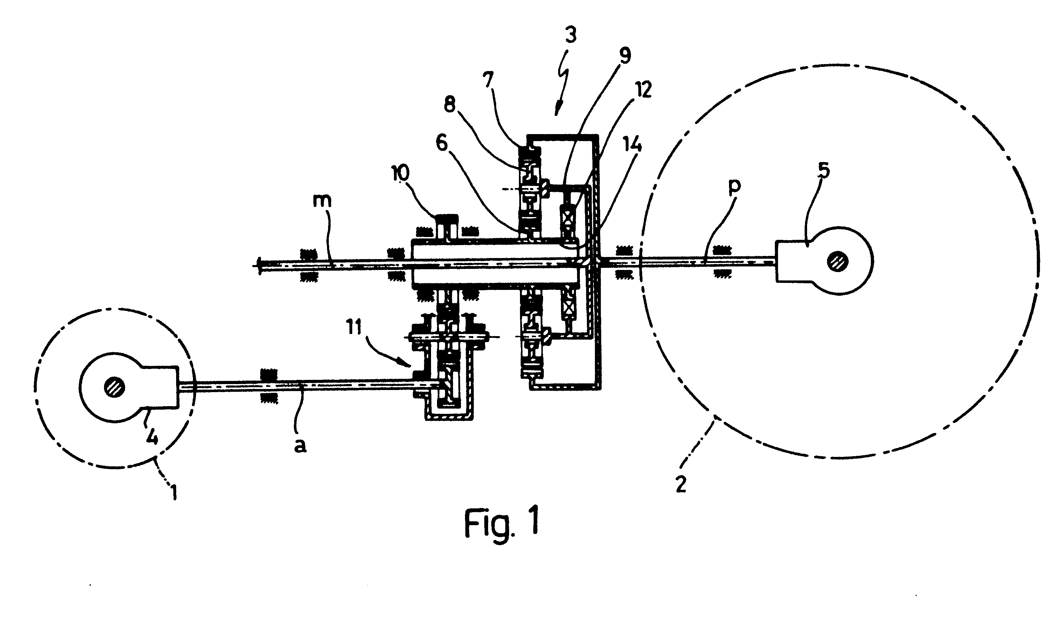

The transmission of the invention is adapted to connect the drive shaft m (Figure 1) of a motor vehicle with the front and rear wheels, 1 and 2 respectively; it substantially comprises an epicyclic mechanism, generally indicated 3, which receives drive from the engine shaft m, a front shaft a and a rear shaft p which are actuated by the said mechanism as well as a front differential 4 and a rear differential 5 interposed, respectively, between the front shaft a and the front wheels 1 and the rear shaft p and the rear wheels 2.

The engine shaft m can be connected directly to the secondary shaft of the gear box of the motor vehicle and the epicyclic mechanism 3 conveniently comprises a sun gear wheel 6 coaxial with the shaft m, a ring gear 7 coaxial with the above, and a series of planet gears 8 meshing with the sun wheel 6 and the ring gear 7 and supported by a carrier 9 rigidly connected to the engine shaft m. The ring gear 7 is rigidly connected to the rear shaft p as is clearly seen from Figure 1, whilst the sun gear wheel 6 is rigidly connected to a gear wheel 10 meshing with a gear wheel of a pair of gear wheels 11 the other wheel of which is rigidly connected to the front shaft a.

The said epicyclic mechanism therefore comprises three rotatable elements a first of which is constituted by the sun gear wheel 6, the second by the ring gear 7 and the third by the carrier 9.

According to the invention, between the first and third rotatable elements, that is say between the sun gear wheel 6 and the carrier 9 there are interposed over-run means indicated generally with the reference numeral 12, which are able to allow relative rotation between the said two rotatable elements only when the relative rotation of one of these elements with respect to the other is in a predetermined direction and to prevent this relative rotation when the relative rotation of the same element with respect to the other is in a direction opposite that first defined. Such means can be constituted by a free wheel of the type comprising a pair of rings provided with tracks between which are interposed bodies of a particular form, that is to say able to allow relative rotation between these rings when the relative rotation of one ring with respect to the other is in a predetermined direction and to prevent this relative rotation when the relative rotation of the same ring with respect to the other is in the direction opposite that first defined.

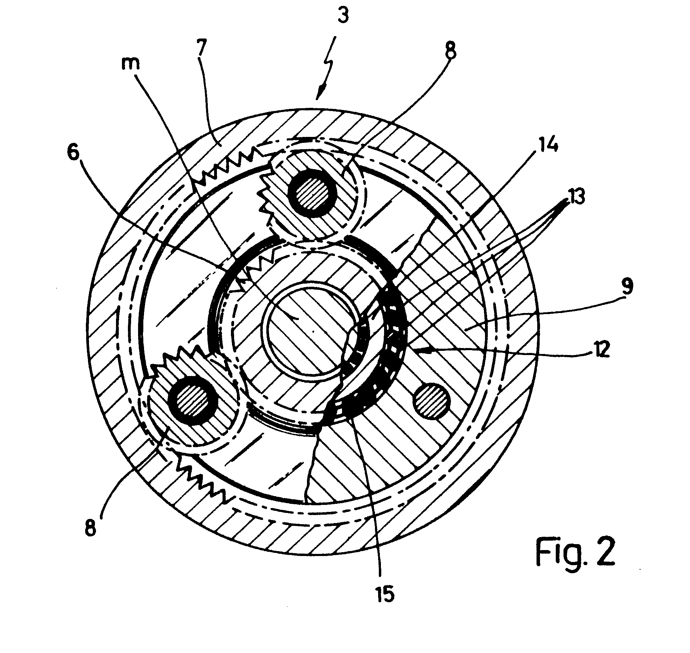

The over-run means 12 in the embodiment represented in Figure 2 are simply constituted by a ring of bodies 13 having the shape visible in Figure 2, which are interposed between a sleeve 14 to which the gear wheel 6 is fixed and a cylindrical track 15 formed within the carrier 9. The form and arrangement of these bodies is such that when the relative rotation of the gear carrier 9 with respect to the sun gear wheel 6 is clockwise as viewed in Figure 2 free rotation between these two elements is allowed, whilst it is prevented when this relative rotation is in the opposite sense; if the angular velocities of the drive shaft (and therefore the carrier 9) and the sleeve 14 (and therefore the sun gear wheel 6) are indicated $\omega_m$ and $\omega_a$ respectively the relative rotation is allowed when the angular velocity $\omega_m$ is greater than the angular velocity $\omega_a$.

More generally the over-run means 12 can be interposed between any two of the three rotatable elements of the epicyclic mechanism 3 and therefore, rather than being interposed between the sun gear wheel 6 and the carrier 9 they could be interposed between this latter and the ring gear 7 or between this ring gear 7 and the sun gear wheel 6. For each of the said cases it is necessary to choose suitable transmission ratios between the epicyclic mechanism 3 and the front shaft a and rear shaft p such as to obtain, when the vehicle moves in a straight line in normal running conditions, angular velocities of the two elements between which the over-run means are interposed which are slightly different from one another and in a sense such as to allow free relative rotation of these elements in the said running conditions.

The epicyclic mechanism 3 can be replaced with a normal differential having bevel gears, for example of the type in which the first and second rotatable element of the first-defined epicyclic mechanism are constituted by the planet gears of the differential, whilst the third element of the mechanism is constituted by the planet gear housing of the differential itself. The behaviour of this differential is entirely similar to that of an epicyclic mechanism with the single difference that the driving torque is divided equally between the front shaft a and the rear shaft p.

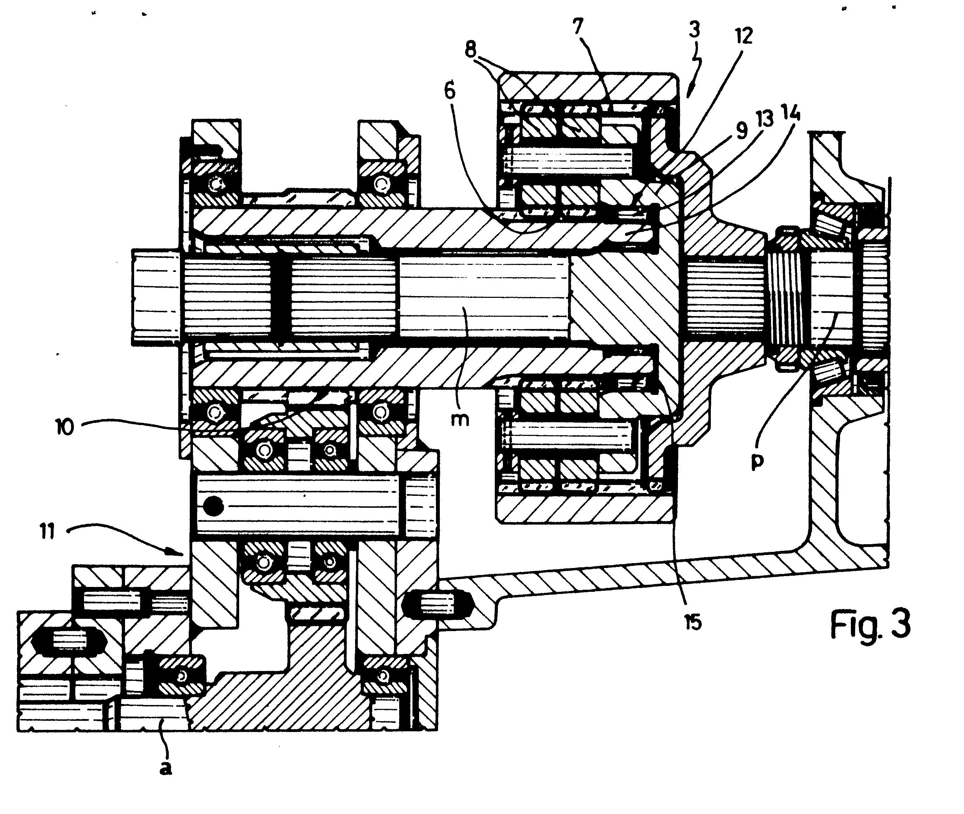

Figure 3 is a longitudinal sectional view of an epicyclic mechanism corresponding to that indicated 3 in the diagram of Figures 1 and 2; in this the members which have been indicated in the preceding Figures have been distinguished with the same reference numerals.

The function of the transmission described is as follows.

When the motor vehicle is in normal straight ahead operating conditions the epicyclic mechanism 3 divides the torque between the front shaft a and the rear shaft p in the predetermined ratio depending on the ratio of the radii of the sun gear wheel 6 and the ring gear 7. In these conditions, because of the particular transmission ratio which has been chosen between the gear wheels 10 and the other gears of the transmission interposed between it and the front shaft a, and the particular transmission ratio which has been chosen between the gear wheels of the differentials 4 and 5, the sun gear wheel 6 and the gear carrier 9, which rotate in the same directional sense, do not have the same angular velocity but that of the gear carrier ($\omega_m$) is slightly greater than that ($\omega_a$) of the sun gear wheel 6. In these conditions the over-run means 12 allow free rotation of the gear carrier with respect to the sleeve 14 on which the sun gear wheel 6 is mounted and therefore the free and independent rotation of these two elements.

If it is supposed that under the action of the driving torque the front wheels 1 start to slip, having exceeded the slip threshold condition, the angular velocity of the front shaft a tends to increase and therefore the ratio between this angular velocity and that of the rear shaft p increases in this way causing an increase in the angular velocity of the sun gear wheel 6: as soon as the condition of equalisation between the angular velocity ($\omega_a$) of the sleeve 14 and ($\omega_m$) of the gear carrier 9 is reached the over-run means 12 cause rigid connection between the said sun gear wheel 6 and the gear carrier 9; in this way a substantially rigid connection between these shafts is obtained: therefore in these operating conditions there is a true locking of the epicyclic mechanism 3 with consequent cancelling of the differential effect.

If it is now supposed that in normal straight ahead conditions the brakes of the rear wheels 2 are actuated, the angular velocity of the rear shaft p and of the gear carrier 9 will tend to reduce and in this case there will be an increase in the ratio between the angular velocity of the front shaft a and that of the rear shaft p with the consequence that intervention of the over-run means 12 is activated effectively to lock together the gear carrier 9 and the sleeve 14 and to transmit the braking torque acting on the rear wheels, through the epicyclic mechanism 3 (locked by the over-run means 12) to the front shaft a and therefore also to the front wheels 1. It is therefore evident that, with the mechanical transmission of the invention, it is possible considerably to simplify the braking system of the motor vehicle simply by arranging brakes on the rear wheels 2: this constructional arrangement can be particularly useful in several types of vehicles, for example in tractors.

When the vehicle is moving in reverse the various members of the mechanism tend to rotate with angular velocities having the opposite directional sense from those first indicated and, therefore, the sense of rotation and the absolute values of the angular velocities of the sleeve 14 and of the gear carrier 9 are such as to cause locking of the over-run means 12, and therefore these two members are fixed for movement together: consequently the two shafts a and p are fixedly connected and the differential mechanism 3 cannot perform its action; when the rear wheels 2 are braked, because of the direction of rotation of the sun gear wheel 6 with respect to the gear carrier 9, which is opposite that of the preceding case of forward movement, the over-run means 12 allow free rotation of the first with respect to the second and therefore, as distinct from before, there is no transfer of braking torque from the rear wheels to the front wheels. This situation is acceptable, however, because of the low velocity with which vehicles move in this operating condition, and because of the increase in force transmitted between the rear wheels and the ground consequent on the dynamic action of these operating conditions.

The invention is also applicable in types of vehicles in which the principal traction is in the front axis and the rear axis acts to aid the traction; in such vehicles, more specifically road vehicles, the braking (present on all four wheels) is preponderent on the front axle.

In these types of vehicles a device such as that described but such as to act in traction (rendering the two axes fixed for rotation together) when the speed of the front wheels is greater than that of the rear wheels (loss of adhesion of the front axle) gives a benefit even in braking; in fact, during braking it would prevent locking of the rear axle before locking of the front axle.

It is evident that the embodiment of the present invention described can have modifications and variations introduced thereto without departing from the ambit of the invention itself.

In particular, the over-run means 12, rather than being constituted by a free wheel, can comprise a mechanically equivalent member, for example a ratchet mechanism or any other over-run clutch.

**Claims**

1. A mechanical transmission between the gear box and the wheels (1, 2) of a four wheel drive motor vehicle comprising an epicyclic mechanism (3) for transmitting drive from the engine shaft (m) of the said motor vehicle to a front shaft (a) which drives the front wheels (1) and to a rear shaft (p) which drives the rear wheels (2), the said epicyclic mechanism comprising a first rotatable element (14) connected to the said front shaft and fixed for rotation with a first gear wheel (6), a second rotatable element (7) connected to the said rear shaft and fixed for rotation with a second gear wheel (7) and a series of planet gears (8) each of which simultaneously meshes with the said first and second gear wheels, and a third rotatable element (9) for supporting the said planet gears and on which they are rotatable, one of the said rotatable elements being connected to the said drive shaft and each of the other two rotatable elements being connected to one of the said front and rear shafts, characterised by the fact that it includes over-run means (12) interposed between a pair of the said rotatable elements and operable to allow relative rotation between such two rotatable elements when the relative rotation of a predetermined element of the pair with respect to the other element is in a predetermined direction and automatically to prevent such relative rotation when the relative rotation of the same predetermined element with respect to the other element is in a direction opposite the said predetermined direction, the transmission ratio between the said epicyclic mechanism and the said front and rear shafts being chosen in such a way that, during normal forward rectilinear operating condition of the motor vehicle the angular velocity of the two rotatable elements of the said pair is slightly different, and the said over-run means being disposed in such a way that, in the said operating conditions, it allows the free relative rotation of the two elements of the said pair.

2. A transmission according to Claim 1, characterised by the fact that the said over-run means comprise a free wheel interposed between two of the said rotatable elements.

3. A transmission according to Claim 1, characterised by the fact that the said over-run means comprise a ratchet mechanism.

4. A transmission according to any preceding Claim, characterised by the fact that the said epicyclic mechanism (3) is a torque dividing epicyclic unit, the said first element of the mechanism is constituted by the sun gear wheel (6) of the unit itself, the said second rotatable element of the mechanism is constituted by the ring gear (7) of the unit and the said third rotatable element of the mechanism is constituted by the gear carrier (9) of the unit on which the said planet gears (8) are rotatable.

5. A transmission according to any of Claims from 1 to 4, characterised by the fact that the said epicyclic mechanism is constituted by a differential, the said first and second elements of the mechanism being constituted by the planet gears of the differential and the said third element of the mechanism being constituted by the planet gear housing of the differential.

6. A transmission according to any preceding Claim, characterised by the fact that pairs of gear wheels (10, 11, 4, 5) are fitted between the said epicyclic mechanism and the said front and rear wheels.

7. A transmission according to any of Claims from 4 to 6, characterised by the fact that the said drive shaft (m) is connected to the said gear carrier (9), the said front shaft (a) is connected to the said sun gear wheel (6) and the said rear shaft (p) is connected to the said ring gear (7), the said over-run means (12) being fitted between the said sun gear wheel and the said ring gear.

Fig. 1

0 281 874

Fig. 2

0 281 874

Fig. 3

0 281 874

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 828 877 (FOGELBERG)<br>* whole document *<br>--- | 1,3-7 | B 60 K 17/35 |
| X | GB-A-1 326 537 (FERGUSON)<br>* page 2, line 85 - page 3, line 19; figure 2 *<br>--- | 1,2,4,5,7 | |
| X | US-A-3 378 093 (HILL)<br>* column 4, lines 5-50; figure 2 *<br>--- | 1,2,4,5 | |
| X | US-A-3 339 661 (HILL et al.)<br>* column 2, lines 18-39; figure 1 *<br>--- | 1,2,4,5,7 | |
| A | BE-A- 546 677 (FERGUSON)<br>* claim 1 *<br>----- | 1 | |

TECHNICAL FIELDS
SEARCHED (Int. Cl.4)

B 60 K 17/00
B 60 K 23/00

The present search report has been drawn up for all claims

| Place of search | Date of completion of the search | Examiner |
|---|---|---|
| BERLIN | 31-05-1988 | KRIEGER P O |